# EUROPEAN PATENT SPECIFICATION

(11) **EP 0 996 341 B1**
(45) Date of publication and mention of the grant of the patent: **17.09.2003**
(21) Application number: 98932494.2
(22) Date of filing: 15.07.1998
(51) Int. Cl.: A23G 9/10, A23G 9/28

(54) **APPARATUS AND METHOD FOR PREPARING FROZEN YOGURT AND ICE CREAM**
VORRICHTUNG UND VERFAHREN ZUR HERSTELLUNG VON GEFRIERJOGHURT UND SPEISEEIS
APPAREIL ET PROCEDE DE PREPARATION DE YOGHOURTS GELES ET DE CREMES GLACEES

(30) Priority: 17.07.1997 IL 12133497
(43) Date of publication of application: 03.05.2000
(73) Proprietor: Katz, Avraham, 49375 Petah-Tikva (IL)
(72) Inventor: Katz, Avraham, 49375 Petah-Tikva (IL)
(74) Representative: Iemenschot, Johannes Andreas, Ir.
(86) International application number: IL9800330
(87) International publication number: WO99003358

(56) References cited:
- BE-A- 528 315
- DE-C- 361 376
- DE-C- 804 936
- US-A- 1 610 626
- US-A- 3 797 268
- US-A- 4 645 093
- US-A- 5 022 315
- US-A- 5 680 769
- PATENT ABSTRACTS OF JAPAN vol. 013, no. 275 (C-610), 23 June 1989 -& JP 01 071446 A (JITSUO INAGAKI), 16 March 1989

## Description

### FIELD OF THE INVENTION

The present invention relates to an apparatus and method for preparing and dispensing frozen yogurt and ice cream on a commercial scale in the form of fresh individually prepared portions for consumption shortly after preparation. The apparatus and method are most suitable for use in an ice cream parlour or shop to provide freshly prepared individual portions of frozen yogurt or ice cream of any desired flavour.

Ices based on frozen water were known in the Roman Empire and Marco Polo is supposed to have brought a recipe for milk ices from the Far East. Commercial production of ice cream became successful after the discovery that salt mixed with ice produces a lower temperature than ice alone. The introduction of mechanical refrigeration in the late 19th century greatly assisted the growth of the ice cream industry.

Commercial manufacture of ice cream involves several phases, each of which contributes to the quality of the product. These phases include pasteurization, homogenization, whipping and controlled freezing. Essentially ice cream is the product of a pasteurized, homogenized, milk fat composition, which is whipped in the presence of air and frozen simultaneously at a controlled temperature.

The basic ingredients in ice cream consist of milk or vegetable fat, non-fat milk or vegetable solids, sweetener such as sugar, stabilizer and/or emulsifier. These are pasteurized and homogenized together into what is called an ice cream "mix". To make ice cream, the mix is placed in a container such as a cylinder provided with a scraper. The cylinder and scraper are rotated in opposite directions in the presence of air and undergo cooling, so that the mix gets whipped. The scraper scrapes the mix from the wall of the container and forces it back into the middle, while air is constantly being whipped into the freezing composition. To the basic ice cream mix there is usually added either before or during freezing, some flavouring, colouring and/or pieces of fruit and/or nuts. The amount of air incorporated into the freezing mixture is defined in terms of overrun, that is to say, for example, if the volume of the mixture is doubled by the introduction of air, the composition has a 100% overrun. Generally, ice cream has an overrun of 70-110%. The scraper, by removing the ice cream from the walls and pushing it to the middle of the container, aids in the whipping process. The freezing temperature for preparing ice cream is generally about -4°C. Freshly prepared ice cream has about one third to one half of its water content in the form of ice, while upon storage, about 90% of the water converts to ice. Ice cream is therefore most palatable and creamy when it is consumed just as it comes from the ice cream machine that prepares it. However, ice cream is generally sold as hardened ice cream which was previously prepared and deep frozen for storage and which has lost much of its creamy fresh texture and, therefore, palatability. There are of course ice cream machines that produce continuous ice cream or custard which are dispensed as single portions individually as ordered from a spigot in the machine. These machines, however, are relatively large, and each machine is able to provide only a single flavour ice cream. Thus, in order to provide a variety of flavours, one would have to install one machine for each flavour, which would occupy substantial space and is impractical for conventional ice cream parlours or shops. Therefore, ice cream shops offering many flavours in single individual portions operate by having many containers of differently flavoured hard ice cream, previously prepared and refrigerated. Ice cream orders are scooped out from the particular container having the specific flavour requested. This ice cream of course is the standard bulk ice cream which has lost much of its creaminess and palatability.

Frozen yogurt is also prepared as individual portions from frozen bulk yogurt which already has crystalline water in it. This affects the taste and texture, which is never as good as when fresh and creamy.

U.S. Patent No. 1,610,626 describes an improved soda fountain extending the use of the refrigeration unit.

U.S. Patent No. 3,952,538 discloses a home ice cream making machine using a stationary shaft and dasher associated with a cover which must be on while the ice cream is being made. This patent relates to making family size portions.

U.S. Patent No. 4,441,334 discloses an ice cream machine for domestic use placed in a counter top of a cabinet. This machine is also designed to make family size batches and not single portions.

U.S. Patent No. 5,117,649 discloses a raised pan rail with food pans, each having its own cooling coil.

U.S. Patent No. 5,022,315 describes a small electric household utensil for the production of foods by mixing by stirring. This utensil has a capacity for larger and smaller batches and is covered with a lid with a hole in the middle for a stirrer shaft. It is not suitable for supplying instant ice cream portions on a commercial basis.

Belgian Patent No. 528315 also discloses an ice-cream making machine for domestic use.

U.S. Patent No. 3, 797,268 discloses an ice cream-making machine of large size for making ice cream by providing an independent container containing ice-cream mix within a refrigerating chamber.

German Patent No. 361376 disclose an ice cream-making machine with circulating refrigerant, stirrer and spatula.

German Patent No. 804936 discloses a multiple ice cream-making machine wherein a number of ice-cream making drums are driven from below with a shared horizontal propeller shaft.

### SUMMARY OF THE INVENTION

It is an object of the present invention to provide a commercial apparatus for instantly making and dispensing multiple single portions of fresh frozen yogurt or ice cream as ordered by customers.

Another object of the present invention is to provide an apparatus for making multiple single portions of fresh frozen yogurt or ice cream for immediate dispensing to customers in as many different flavours as desired by the customers, the apparatus occupying limited space.

Still another object of the present invention is to provide a commercial method for instantly making and dispensing multiple single portions of freshly prepared frozen yogurt or ice cream with apparatus contained in a relatively small area suitable for an ice cream parlour.

Yet another object of the invention is to provide a commercial method for instantly making and dispensing single portions of freshly prepared frozen yogurt or ice cream in as many flavours as one desires. In accordance with this invention there is provided a commercial apparatus for simultaneously making multiple separate individual portions of fresh frozen yogurt or ice cream for immediate serving to different customers comprising:
a counter table containing,
   a battery of at least three miniature batch type ice cream making machines comprising open rotating containers provided with fixed scraper blades along the height of the container walls, each container having a capacity of 800 ml or less, to accommodate individual portions preferably up to 250 ml of ice cream mix, and
   means for refrigerating said rotating containers sufficiently to produce in each container individual portions of ice cream for immediate dispensing from the open container as it rotates.

The apparatus of this invention is thus suitable for making simultaneously many single batch portions of ice cream which are not intended for storage but for immediate dispensing and consumption. Furthermore, the battery of ice cream machines can make use of a single freezing counter into which the containers are placed without requiring each container to have its individual cooling mantle. In such case, the refrigerated counter has apertures into which the containers are inserted. A mechanism is provided for the containers to be rotated either from their bottoms within the refrigerated counter, or from above the counter via a motor turning a shaft connected to the center of the container. The scraper is preferably fixed having a flat edge. The refrigerated counter may also provide additional apertures for holding trays containing flavours, fruits, nuts and/or chocolate chips, for adding to the basic ice cream mix to give the particular flavour desired. Fresh frozen yogurt is prepared in the same apparatus. The ice cream mix can be a liquid mix or a powder mix to which water is added in the cup.

In another embodiment of the invention, the apparatus also comprises means for preparing the basic ice cream mix. This can be in the form of a large covered vessel equipped with a stirrer and a spigot to prepare the mix and control the outflow of mix into the individual open containers. This vessel can be cooled with the same refrigeration means that cools the rotating containers, thus saving the cost of providing separate freezing means for the vessel. To the spigot there may, optimally, be attached a hose with a nozzle at the other end for dispensing ice cream mix into the individual containers.

### BRIEF DESCRIPTION OF THE DRAWINGS

The present invention will be further understood from the following detailed description taken in conjunction with the drawings, in which -
Figure 1 is a perspective view of a refrigerated counter for use in the present invention;
Figure 2 is a cross-sectional view of a miniature ice cream making machine for use in the invention;
Figure 3 is a top view of the cup shown in Figure 2;
Figure 4 is a cross-sectional view of another miniature ice cream making for use in the invention;
Figure 5 is a top view of the cup shown in Figure 4;
Figure 6 is a top view of an apparatus according to the invention; and
Figure 7 is a perspective view of an apparatus including ice cream mix facilities in accordance with the present invention.

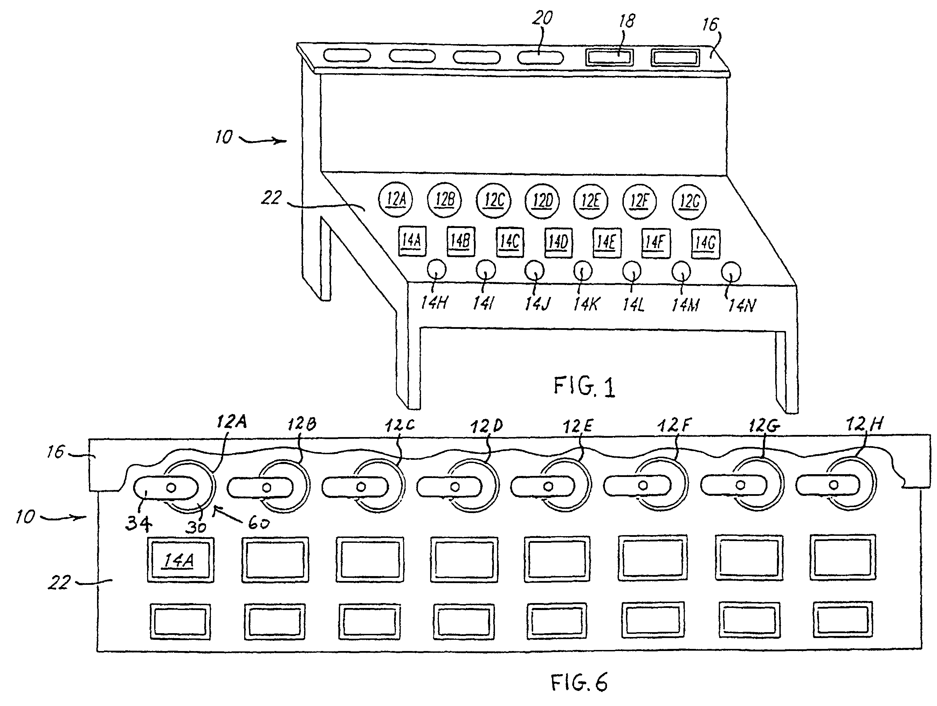

Referring now to Figure 1, there is shown a refrigerated counter table 10 with a counter top 22 having fourteen circular apertures 12A-12G and 14H-14N and seven rectangular apertures 14A-14G. The refrigerated counter may have an elevated counter section 16 which may further have troughs 18 or apertures 20 for holding trays or containers that do not require refrigeration. The apertures 12A-12G will each hold an ice cream making container (not shown) comprised of stainless steel, with a motor (not shown) mounted on or inside the counter 10 having means for rotating the container. The ice cream making container is generally inserted into the apertures 12A-12G, with only the top lip of the container being above the surface of the counter top. The counter table 10 contains refrigeration means as is known in the art. This may consist of a glycol-water mixture through which a refrigerant is circulated by means of tubing inside the table, thus maintaining the desired temperature for making the ice cream. The bottoms of the stainless steel containers rest within the refrigerant and therefore whipping the ice cream mix in the container will form ice cream. The rectangular (14A-14G) and round (14H-14N) apertures are for holding trays with flavours, colours, syrups, fruits, nuts and/or chocolate chips, which are preferably held at cool temperatures. Suitable dispensing means such as scoops, spatulas or spoons are also provided for these trays.

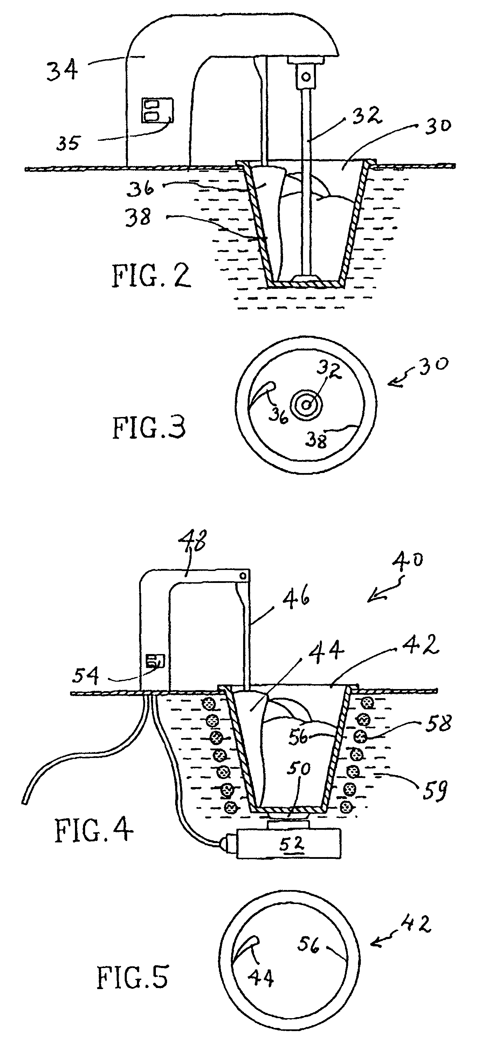

Figures 2 and 3 illustrate one embodiment of a miniature ice cream making machine for inserting into a counter table of Figure 1 in accordance with the present invention. In this embodiment, the cup 30 is attached to a rotating shaft 32 from above, which is rotated by the motor (not shown) contained in housing 34 and activated by switch 35. From the housing 34 a fixed scraper blade 36 extends into the cup 30 adjacent to the inner cup wall 38. In this embodiment the refrigeration medium is cooled at a distance from the cup 30 (not shown) and circulated to surround the cup as it rotates.

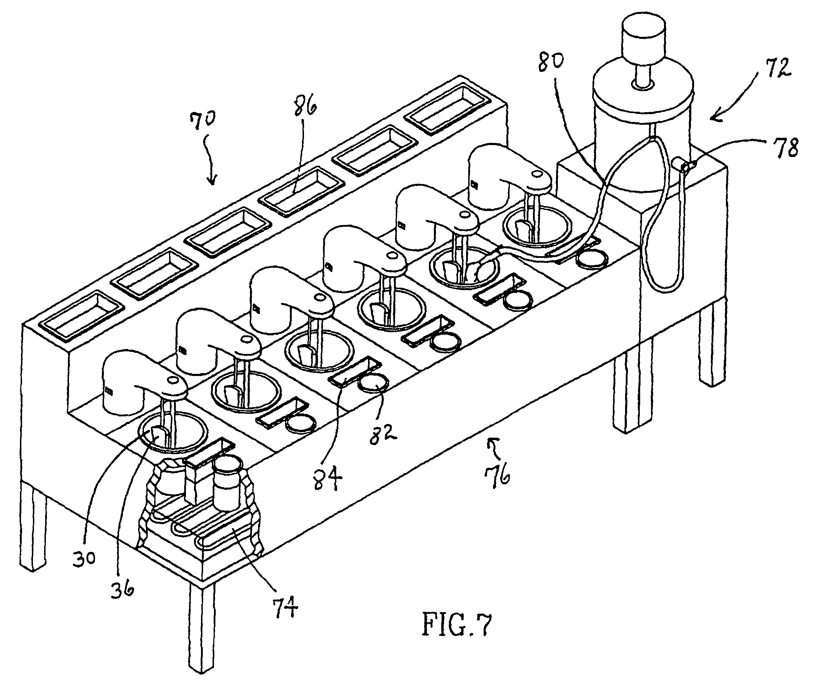

Figures 4 and 5 show another preferred embodiment of a miniature ice cream making machine. The machine 40 comprises an open cup 42 and a fixed scraper blade 44 extending along the height of the container wall from a shaft 46 of a housing 48. The cup 42 has means 50 for engaging a rotating shaft (not shown) coming from a hermetically sealed motor 52 positioned under the cup 42. A switch 54 turns the motor 52 on, thereby rotating the cup 42. Surrounding the cup 42 at some distance from the cup wall 52 are cooling coils 58 that cause the refrigerating medium 59 to cool the cup 42 as it rotates.

Referring now to Figure 6, there is shown an apparatus according to the invention comprising a counter table 10 having a counter top 22 on to which miniature ice cream making machines 60 are mounted. the containers 30 are inserted into the apertures 12A-12H and the motor housing 34 is mounted on the counter top 22. When miniature ice cream making machines of the type shown in Figure 4 are used, the cooling coils 58 of the battery of cups 42 provide sufficient cooling to maintain the desirable temperature for the flavours, fruits and other ingredients contained in the trays 14A-14N. Each of the ice cream making containers 42 can thus be designated for a specific flavour of ice cream, so that the container does not have to be washed out and cleaned in order to prepare the next order of that particular flavour, since any residual ice cream left is insufficient to interfere with the taste, texture or palatability of the next portion that is prepared therein. It is of course possible to designate several containers for the same flavour. This, however, would depend on the relative distribution of the flavours as requested by customers. It is very likely that there will be more ice cream containers designated for making chocolate and vanilla flavoured ice cream than, for example, pistachio or peach ice cream.

Figure 7 shows a refrigerated counter 70 similar to the one shown in figure 1. However, this counter is provided with an adjacent mixing vessel 72 for preparing the basic ice cream mix. The vessel 72 can be cooled with the same refrigeration apparatus 74 used for the counter 76.

The method operates as follows. An ice cream or yogurt mix is prepared conventionally in a separate apparatus 72 by stirring mix powder with water at -8° to -4°C as is known in the art. The mix is then dispensed in a quantity for preparing a single portion in the order of 100-250 ml into the refrigerated miniature ice cream making container 30. This can be done by either using a transfer cup to take the mix directly from the spigot 78 of the mixing vessel 72 to an ice cream making container 30 or by dispensing the mix via a hose 80 into the cup 30. A quantity of the desired flavour extract and/or fruit, nuts, chocolate etc. are added thereto from trays 82, 84 and/or 86. The container is then rotated, causing the yogurt or ice cream mix and flavour to be whipped together with air by means of the scraper 36 which forces the yogurt or ice cream to the middle of the container, while being cooled to a temperature suitable for creating ice cream. This rotating-whipping procedure takes about two to three minutes and provides very fresh frozen yogurt or ice cream having a delicious cream texture and taste unobtainable from stored frozen yogurt or ice cream.

The apparatus of this invention can be used to prepare fresh frozen yogurt or ice cream in situ from ready made powder or liquid ice cream mix without requiring adjacent apparatus to prepare the mix.

## Claims

1. A commercial apparatus for simultaneously making multiple separate individual portions of fresh frozen yogurt or ice cream for immediate serving to different customers comprising:
a counter table (22) containing,
a battery of at least three miniature batch type ice cream making machines (40) comprising open rotating containers (42) provided with fixed scraper blades (44) along the height of the container walls, each container (42) having a capacity of 800 ml or less, to accommodate individual portions preferably up to 250 ml ice of cream mix, and
means (58)(59) for refrigerating said rotating containers sufficiently to produce in each container individual portions of ice cream for immediate dispensing from the open container as it rotates.

2. An apparatus as in claim 1 comprising a battery of at least eight miniature ice cream making machines.

3. An apparatus as in claims 1-2 wherein said means for refrigerating comprises a refrigerant contained inside (74) said counter table.

4. An apparatus as in claims 1-2 wherein said means for refrigerating comprises individual refrigeration coils (58) for each of said containers.

5. An apparatus as in claims 1-4 and also comprising containers (18)(14A) for holding ice cream or ice cream mix additives such as flavours, concentrates, fruits, nuts and/or chocolate chips.

6. An apparatus as in claims 1-5 wherein the containers have a capacity no greater than 500 ml.

7. An apparatus as in claims 1-6 wherein the containers are rotated from the bottom (50).

8. An apparatus as in claims 1-7 combined with an apparatus (72) for preparing ice cream mix.

9. An apparatus as in claim 8 using a common refrigeration system (74).

10. A method for commercially making and dispensing separate multiple individual portions of freshly prepared frozen yogurt or ice cream for immediate serving to a number of different customers comprising:
a counter table (22) containing,
a battery of miniature batch type ice cream making machines (12A-H) comprising open rotating containers (30) provided with fixed scraper blades (36) along the height of the container walls (38)
each container having a capacity of 800 ml or less,
means (58)(59) for refrigerating said rotating containers sufficiently to produce in each container individual portions of ice cream for immediate dispensing,
frozen yogurt or ice cream mix,
flavour concentrates,
introducing separate individual portions preferably of up to 250 ml of frozen yogurt or ice cream mix and flavour concentrates into respective containers (30),
rotating and cooling said containers for a required time, and
scooping up the individual portions of frozen yogurt or ice cream from the open containers while they are rotating for serving to customers.

11. A method as in claim 10, which in addition to flavour concentrates comprises fruits, nuts and/or chocolate chips.

12. A method as in claims 10-11, comprising a battery of at least eight ice cream making machines.

13. A method as in claims 10-12 wherein the battery of ice cream making machines are positioned on or in a counter table (10).

14. A method as in claims 10-13 wherein the counter table (70) provides the refrigeration means (74).

15. A method as in claims 10-14 wherein the counter table (70) also comprises compartments (86)(82) for holding flavour concentrates, fruits, nuts and/or chocolate chips.

16. A method as in claims 10-15 wherein the containers have a capacity no greater than 500 ml.

17. A method as in claims 10-16 wherein said ice cream making machines have containers rotated from the bottom (50).

18. A method as in claims 10-17 wherein the frozen yogurt or ice cream mix is prepared in an apparatus (72) adjacent to the ice cream making machines.

19. A method as in claim 18 wherein the apparatus for making the mix (72) is connected to a counter table holding the ice cream making machines.

20. A method as in claim 19 wherein the ice cream making machines (30) and mix making apparatus (72) are cooled by the same refrigeration system (74).

21. A method as in claims 10-20 wherein the ice cream mix is a powder to which only water has to be added and whipped.

22. A miniature batch type ice cream making machine 40 comprising:
a cup 42 with a scraper blade 44,
a hermetically sealed motor 52 for rotating the cup 42,
a refrigeration medium 59 surrounding the cup 42,
**characterized in that** the scraper blade 44 is a fixed blade extending along the height of the cup wall 56 connected by a shaft 46 to a housing 48, and
the cup 42 comprises engaging means 50 at its bottom for engaging the motor 52 to rotate the cup 42 from below in the refrigeration medium 59.

## Patentansprüche

1. Kommerzielle Vorrichtung zum gleichzeitigen Bereiten mehrerer separater Einzelportionen von frischem Jogurteis oder Speiseeis zum sofortigen Abgeben an verschiedene Kunden, die umfasst:
eine Ladentheke (22), die enthält:
eine Batterie von wenigstens drei Kleinchargen-Speiseeisbereitungsmaschinen (40), die offene, sich drehende Behälter (42) umfassen, die mit stationären Abstreifklingen (44) entlang der Höhe der Behälterwände versehen sind, wobei jeder Behälter (42) ein Fassungsvermögen von 800 ml oder weniger hat, um Einzelportionen von vorzugsweise bis zu 250 ml Speiseeisgemisch aufzunehmen, und
eine Einrichtung (58) (59), mit der die sich drehenden Behälter ausreichend gekühlt werden, um in jedem Behälter Einzelportionen Speiseeis zum sofortigen Verteilen aus dem sich drehenden offenen Behälter zu erzeugen.

2. Vorrichtung nach Anspruch 1, die eine Batterie von wenigstens acht Klein-Speiseeisbereitungsmaschinen umfasst.

3. Vorrichtung nach den Ansprüchen 1-2, wobei die Einrichtung zum Kühlen ein Kältemittel umfasst, dass im Inneren (74) der Ladentheke enthalten ist.

4. Vorrichtung nach den Ansprüchen 1-2, wobei die Einrichtung zum Kühlen einzelne Kühlschlangen (58) für jeden der Behälter umfasst.

5. Vorrichtung nach den Ansprüchen 1-4, die des Weiteren Behälter (18) (14A) zum Aufnehmen von Speiseeis oder Speiseeis-Mischzusätzen, wie beispielsweise Geschmacksstoffen, Konzentraten, Früchten, Nüssen und/oder Schokoladeflocken umfasst.

6. Vorrichtung nach den Ansprüchen 1-5, wobei die Behälter ein Fassungsvermögen von nicht mehr als 500 ml haben.

7. Vorrichtung nach den Ansprüchen 1-6, wobei die Behälter vom Boden (50) her gedreht werden.

8. Vorrichtung nach den Ansprüchen 1-7, die mit einer Vorrichtung (72) zum Herstellen von Speiseeisgemisch kombiniert ist.

9. Vorrichtung nach Anspruch 8, die ein gemeinsames Kühlsystem (74) nutzt.

10. Verfahren zum kommerziellen Bereiten und Verteilen separater mehrerer Einzelportionen von frisch bereitetem Jogurteis oder Speiseeis zum sofortigen Abgeben an eine Anzahl verschiedener Kunden, das umfasst:
eine Ladentheke (22), die enthält:
eine Batterie von Kleinchargen-Speiseeisbereitungsmaschinen (12A-H), die offene, sich drehende Behälter (30) umfassen, die mit stationären Abstreifklingen (36) entlang der Höhe der Behälterwände (38) versehen sind, wobei jeder Behälter ein Fassungsvermögen von 800 ml oder weniger hat,
eine Einrichtung (58) (59), mit der die sich drehenden Behälter ausreichend gekühlt werden, um in jedem Behälter Einzelportionen Speiseeis zum sofortigen Verteilen zu erzeugen,
Jogurteis oder Speiseeisgemisch,
Geschmacksstoffkonzentrate,
Einleiten separater Einzelportionen vorzugsweise von bis zu 250 ml Joghurteis oder Speiseeisgemisch und Geschmacksstoffkonzentraten in entsprechende Behälter (30),
Drehen und Kühlen der Behälter über eine erforderliche Zeit und
Entnehmen der Einzelportionen von Joghurteis oder Speiseeis aus den sich drehenden offenen Behältern zum Abgeben an Kunden.

11. Verfahren nach Anspruch 10, das zusätzlich zu Geschmacksstoffkonzentraten Früchte, Nüsse und/oder Schokoladenflocken umfasst.

12. Verfahren nach den Ansprüchen 10-11, das eine Batterie von wenigstens acht Speiseeisbereitungsmaschinen umfasst.

13. Verfahren nach den Ansprüchen 10-12, wobei die Batterie von Speiseeisbereitungsmaschinen an oder in einer Ladentheke (10) angeordnet ist.

14. Verfahren nach den Ansprüchen 10-13, wobei die Ladentheke (70) die Kühleinrichtung (74) bereitstellt.

15. Verfahren nach den Ansprüchen 10-14, wobei die Ladentheke (70) auch Fächer (86), (82) zum Aufnehmen von Geschmacksstoffkonzentraten, Früchten, Nüssen und/oder Schokoladenflocken umfasst.

16. Verfahren nach den Ansprüchen 10-15, wobei die Behälter ein Fassungsvermögen von nicht mehr als 500 ml haben.

17. Verfahren nach den Ansprüchen 10-16, wobei die Speiseeisbereitungsmaschinen Behälter aufweisen, die vom Boden (50) her gedreht werden.

18. Verfahren nach den Ansprüchen 10-17, wobei das Jogurteis oder Speiseeisgemisch in einer Vorrichtung (72) an die Speiseeisbereitungsmaschinen angrenzend hergestellt wird.

19. Verfahren nach Anspruch 18, wobei die Vorrichtung zum Bereiten des Gemischs (72) mit einer Ladentheke verbunden ist, die die Speiseeisbereitungsmaschinen aufnimmt.

20. Verfahren nach den Anspruch 19, wobei die Speiseeisbereitungsmaschinen (30) und die Gemischbereitungsvorrichtung (72) mit ein und demselben Kühlsystem (74) gekühlt werden.

21. Verfahren nach den Ansprüchen 10-20, wobei das Speiseeisgemisch ein Pulver ist, dem lediglich Wasser zugesetzt werden und das geschlagen werden muss.

22. Kleinchargen-Speiseeisbereitungsmaschine (40), die umfasst:
eine Schale (42) mit einer Abstreifklinge (44),
einen hermetisch abgedichteten Motor (52) zum Drehen der Schale (42),
ein Kühlmedium (59), das die Schale (42) umgibt,
**dadurch gekennzeichnet, dass** die Abstreifklinge (44) eine stationäre Klinge ist, die sich entlang der Höhe der Schalenwand (56) erstreckt und durch eine Welle (46) mit einem Gehäuse (48) verbunden ist, und
die Schale (42) eine Eingriffseinrichtung (50) an ihrem Boden umfasst, die mit dem Motor (52) in Eingriff kommt, um die Schale (42) in dem Kühlmedium (59) von unten her zu drehen.

## Revendications

1. Appareil commercial destiné à préparer en même temps plusieurs portions individuelles séparées de yaourt congelé ou de crème glacée frais à servir tout de suite à différents clients, comprenant :
une table formant présentoir (22) contenant,
une batterie d'au moins trois machines miniatures à préparer la crème glacée opérant par charges (40) comprenant des récipients tournants ouverts (42) pourvus de lames de grattage fixes (44) le long de la hauteur des parois du récipient, chaque récipient (42) ayant une capacité de 800 ml ou inférieure, pour recevoir des portions individuelles, ne dépassant pas de préférence 250 ml, de préparation pour crème glacée, et
des moyens (58) (59) de réfrigération desdits récipients tournants, suffisants pour préparer dans chaque récipient des portions individuelles de crème glacée à distribuer tout de suite depuis le récipient ouvert en rotation.

2. Appareil selon la revendication 1, comprenant une batterie d'au moins huit machines miniatures à préparer la crème glacée.

3. Appareil selon les revendications 1 et 2, dans lequel lesdits moyens de réfrigération comprennent un système réfrigérant situé à l'intérieur (74) de ladite table formant présentoir.

4. Appareil selon les revendications 1 et 2, dans lequel lesdits moyens de réfrigération comprennent des résistances de réfrigération individuelles (58) pour chacun desdits récipients.

5. Appareil selon les revendications 1 à 4, et comprenant également des récipients (18) (14A) pour conserver des additifs de crème glacée ou de préparation pour crème glacée, tels que des arômes, des concentrés d'arômes, des fruits, des noix et/ou des pépites de chocolat.

6. Appareil selon les revendications 1 à 5, dans lequel les récipients ont une capacité inférieure à 500 ml.

7. Appareil selon les revendications 1 à 6, dans lequel les récipients sont mis en rotation à partir de leur partie inférieure (50).

8. Appareil selon les revendications 1 à 7 combiné à un appareil (72) de fabrication de préparation pour crème glacée.

9. Appareil selon la revendication 8 utilisant un système de réfrigération courant (74).

10. Procédé de préparation et de distribution commerciales de plusieurs portions individuelles séparées de yaourt congelé ou de crème glacée fraîchement préparés à servir tout de suite à un certain nombre de clients différents, comprenant :
une table formant présentoir (22) contenant,
une batterie de machines miniatures à préparer la crème glacée opérant par charges (12A-H) comprenant des récipients tournants ouverts (30) pourvus de lames de grattage fixes (36) le long de la hauteur des parois du récipient (38), chaque récipient ayant une capacité de 800 ml ou inférieure,
des moyens (58) (59) de réfrigération desdits récipients tournants, suffisants pour préparer dans chaque récipient des portions individuelles de crème glacée à distribuer tout de suite,
du yaourt congelé ou une préparation pour crème glacée,
des concentrés d'arômes,
l'introduction de portions individuelles séparées, ne dépassant pas de préférence 250 ml, de yaourt congelé ou de préparation pour crème glacée, et de concentrés d'arômes dans des récipients respectifs (30),
la rotation et le refroidissement desdits récipients pendant une durée requise, et
la récupération les portions individuelles de yaourt congelé ou de crème glacée desdits récipients ouverts pendant qu'ils tournent pour les servir aux clients.

11. Procédé selon la revendication 10 qui, outre les concentrés d'arômes, comprend des fruits, des noix et/ou des pépites de chocolat.

12. Procédé selon les revendications 10 et 11, comprenant une batterie d'au moins huit machines à préparer la crème glacée.

13. Procédé selon les revendications 10 à 12, dans lequel la batterie de machines à préparer la crème glacée est placée sur ou encastrée dans la table formant présentoir (10).

14. Procédé selon les revendications 10 à 13, dans lequel la table formant présentoir (70) est équipée de moyens réfrigérants (74).

15. Procédé selon les revendications 10 à 14, dans lequel la table formant présentoir (70) comprend également des compartiments (86) (82) pour conserver des concentrés d'arômes, des fruits, des noix et/ou des pépites de chocolat.

16. Procédé selon les revendications 10 à 15, dans lequel les récipients ont une capacité inférieure à 500 ml.

17. Procédé selon les revendications 10 à 16, dans lequel lesdites machines à préparer la crème glacée ont des récipients sont mis en rotation à partir de leur partie inférieure (50).

18. Procédé selon les revendications 10 à 17, dans lequel le yaourt congelé ou la préparation pour crème glacée est préparé dans un appareil (72) adjacent aux machines à préparer la crème glacée.

19. Procédé selon la revendication 18, dans lequel l'appareil de fabrication de la préparation (72) est relié à une table formant présentoir équipée de machines à préparer la crème glacée.

20. Procédé selon la revendication 19, dans lequel les machines à préparer la crème glacée (30) et l'appareil de fabrication de la préparation (72) sont refroidis par le même système de réfrigération (74).

21. Procédé selon les revendications 10 à 20, dans lequel la préparation pour crème glacée est une poudre à laquelle uniquement de l'eau doit être ajoutée et mélangée au fouet.

22. Machine miniature à préparer la crème glacée opérant par charges (40) comprenant :
un godet 42 doté d'une lame de grattage 44,
un moteur scellé hermétiquement 52 pour faire tourner le godet 42,
un moyen de réfrigération 59 entourant le godet 42,
**caractérisée en ce que** la lame de grattage 44 est une lame fixe s'étendant le long de la hauteur des parois du godet 56 reliée par un arbre 46 à un logement 48, et
le godet 42 comprend des moyens d'entraînement 50 sur sa partie inférieure pour entraîner le moteur 52 afin de faire tourner le godet 42 depuis le dessous dans le moyen de réfrigération 59.
